(19) **Europäisches Patentamt**

**European Patent Office**

**Office européen des brevets**

(11) Publication number: **0 446 985 A1**

(12) # EUROPEAN PATENT APPLICATION

(21) Application number: 91200455.3

(22) Date of filing: 04.03.91

(51) Int. Cl.⁵: **G08G 1/09, H04H 1/00**

(30) Priority: 07.03.90 NL 9000533

(43) Date of publication of application:
18.09.91 Bulletin 91/38

(84) Designated Contracting States:
AT CH DE FR GB IT LI NL SE

(71) Applicant: N.V. Philips' Gloeilampenfabrieken
Groenewoudseweg 1
NL-5621 BA Eindhoven (NL)

(72) Inventor: Kamalski, Theodor Ignatius Eduard
c/o INT. OCTROOIBUREAU B.V. Prof.
Holstlaan 6
NL-5656 AA Eindhoven (NL)

(74) Representative: Schoonheijm, Harry Barend
et al
INTERNATIONAAL OCTROOIBUREAU B.V.
Prof.Holstlaan 6
NL-5656 AA Eindhoven (NL)

(54) Method of transmitting radio data system signals with traffic program identification and receiver for such radio data system signals.

(57) Method of transmitting radio data system (RDS) signals in groups of the Extended Other Network (EON) type which accompany a broadcast program comprising data relating to a traffic program each group of which comprises the program identification code of each one of the two programs as well as first and second flag bits, said first flag bit being used to identify the traffic program as such and said second flag bit marking a live broadcast of traffic information in the traffic program, and a receiver for processing RDS signals obtained by means of this method. In order to enable selective change-over of the receiver tuning to traffic information which is relevant to the user, the traffic information items are divided, according to the invention, into several classes of geographical relevance, which classes are identified by means of a classification code word which is incorporated in said groups at least during a live broadcast of traffic information in the traffic program.

FIG.1

EP 0 446 985 A1

# METHOD OF TRANSMITTING RADIO DATA SYSTEM SIGNALS WITH TRAFFIC PROGRAM IDENTIFICATION AND RECEIVER FOR SUCH RADIO DATA SYSTEM SIGNALS

The invention relates to a method of transmitting Radio Data System (RDS) signals in groups of the Extended Other Network (EON) type which accompany a broadcast program comprising data relating to a traffic program each group of which comprises the program identification code of each one of the two programs as well as first and second flag bits, said first flag bit being used to identify the traffic program as such and said second flag bit marking a live broadcast of traffic information in the traffic program, and a receiver for processing radio data system signals obtained by means of this method.

A radio data system in which said method and said receiver are used is known per se from the EBU publication "Proposed Supplement 4 to EBU Doc. Tech. 3244 (Specifications of the Radio Data System RDS) Enhanced Other Network Feature" of 6 February 1989.

The known radio data system provides the possibility of transmitting reliable information, not only relating to the program to which the receiver is tuned - the afore-mentioned broadcast program - but also relating to other programs such as traffic programs. To this end use is made of so-called Enhanced Other Network (EON) groups of the type 14, versions A and B. In said version A traffic programs are identified with a first flag bit in block 2 and the tuning data, such as the list of alternative frequencies and other data such as those relating to the program service name are transmitted in the third block.

In the known receiver memory banks are assigned to the program identification code of the broadcast program, inter alia to that of the traffic programs which are received via the EON groups. While the receiver is being tuned to the broadcast program, the alternative frequencies (AFs) of these programs are stored in these memory banks, preferably in a so-called mapped frequency ordered structure. As is known, this provides the possibility of a rapid program change-over to the AF having the best reception quality.

A live broadcast of traffic information in a traffic program is preceded by a rapid succession of EON groups of said type 14 of the version B in the RDS signal of the broadcast program. Like the version A, this version B comprises a first flag bit which is used to indicate that the program, whose program identification code is given in the fourth block, is a traffic program. The last-mentioned version B also comprises a second flag bit which is at a logic 1 value when there is a live broadcast of traffic information in said traffic program.

In this known radio data system the receiver, which is adapted for automatic tuning to traffic programs, is tuned at each marking of a traffic information item by means of EON groups of the type 14, version B to a traffic program whose program identification code is in the fourth block of these EON groups. In practice, one and the same traffic information item which is relevant or irrelevant to the user may be automatically broadcast several times in succession. The user of the known receiver may thus be overloaded with redundant traffic information till he is so bored with it that he switches off the feature of automatic tuning to traffic programs.

It is an object of the invention to provide a method of transmitting traffic program information in such a way that the above-mentioned drawback of the known method can be obviated in a simple manner.

According to the invention, a method of transmitting radio data system (RDS) signals in groups of the Extended Other Network (EON) type which accompany a broadcast program comprising data relating to a traffic program each group of which comprises the program identification code of each one of the two programs as well as first and second flag bits, said first flag bit being used to identify the traffic program as such and said second flag bit marking a live broadcast of traffic information in the traffic program is characterized in that the traffic information items are divided into several classes of geographical relevance, which classes are identified by means of a classification code word which is incorporated in said groups at least during a live broadcast of traffic information in the traffic program.

This measure is based on the recognition that road users can be categorized as to the size of the area through which they travel to reach their destination. Road users having a local destination, i.e. a destination within the region in which they are travelling will generally be interested in traffic information relating to this region only. Road users having a destination outside this region may be interested in local and/or national (supraregional) traffic information.

The measure according to the invention can be used in the established format of the EON groups type 14, version B and thus does not require any additional transmission capacity.

A receiver for processing RDS signals obtained by means of the method as described hereinbefore, which receiver comprises a receiver section for receiving and processing an RF RDS FM signal accompanying a broadcast program in a baseband RDS signal, a device for selecting the EON groups in the baseband RDS signal and for identifying the traffic program by way of the logic value of the first flag bit, at least first and second memory banks assigned to the program identification code of the broadcast program and traffic program, respectively, for storing the alternative frequencies of these programs in said banks, said device also being provided with means for identifying a live broadcast of traffic information in the traffic program by way of the logic value of the second flag bit is characterized in that the device also identifies the class of geographical relevance of the traffic information in the traffic program by way of the classification code word in the received EON groups for selective tuning to a traffic program dependent on the identified class and on the logic value of the second flag bit.

When using this measure in the receiver according to the invention it is possible to realise a program change-over which is selective as to the geographical relevance of the traffic information. Such a selective program change-over may be initiated by the user after the traffic information class is optically displayed, or it can be realised automatically. In the latter case the receiver may be provided with a selector switch with which the user can make a selection as to whether no traffic information, local/regional traffic information, national/supraregional traffic information or all traffic information of a traffic program should be presented, while a selective program change-over is automatically effected if the received classification code word corresponds to the classification code word which the user has preset by means of this selector switch.

A preferred embodiment of such a receiver is therefore characterized in that the device realises tuning to the traffic program if the identified class of traffic information in the traffic program corresponds to a preselected class and if the second flag bit identifies a live broadcast of a traffic program.

Another preferred embodiment of a receiver according to the invention is characterized by a display device for displaying the name and class of the traffic program if the second flag bit identifies a live broadcast of traffic information.

The invention will be described in greater detail by way of example with reference to the Figures shown in the drawings.

In these drawings

Fig. 1 shows the structure of the EON groups of the type 14, version B obtained by means of the method according to the invention;

Fig. 2 shows a receiver for processing radio data signals according to the invention;

Fig. 3 shows a flow chart indicating the signal processing operation in a receiver according to the invention.

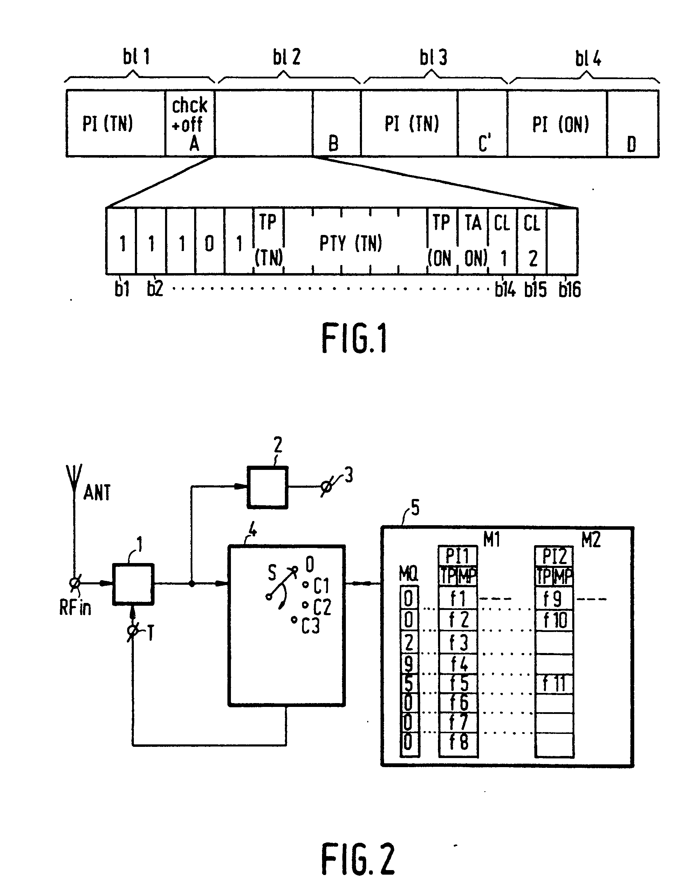

Fig. 1 shows a block structure of a novel EON group type 14, version B which can be used for performing the method according to the invention. This novel group type 14B comprises first to fourth blocks BL1-BL4 which, except for two bits in the second block BL2, correspond to those of the known group type 14B as defined in the afore-mentioned EBU publication. For a further description of the data transmitted in the section of the novel group type 14B corresponding to the known section, reference is made to this publication.

The known group type 14B comprises a plurality of unused bits in the second block BL2. A novel use is allocated to two bits, namely bits nos. 14 and 15 of BL2 in the novel group type 14B: these bits are used to identify the geographical relevance of traffic information in the traffic program whose program identification code is in the fourth block BL4. Said bits form a classification code word and are referred to as first and second classification bits CL1 and CL2, respectively. The following coding scheme can then be used:

| CL1 | CL2 | Class of geographical relevance |
|-----|-----|--------------------------------|
| 0 | 0 | undefined |
| 0 | 1 | first class, or local and regional traffic information |
| 1 | 0 | second class, or national and supraregional traffic information |
| 1 | 1 | third class, or national, supraregional, regional and local traffic information. |

A traffic program which does not provide the possibility of selective class identification is identified with a logic value 0 for both CL1 and CL2, while a traffic program providing this possibility and transmitting the traffic information of both the first and the second class is identified with logic values 1,1 for CL1, CL2, respectively. The first and the second class of traffic information relate to a region covered by the broadcast area of the relevant traffic program and to the region of a country or federal state or supraregion and are identified with 0,1 and 1,0 for CL1, CL2, respectively.

Fig. 2 shows a radio data system (RDS) receiver according to the invention, comprising a receiver section 1 in which a tuning data is applied via a tuning input T for tuning the receiver to a desired RF FM RDS broadcast signal which is applied from an antenna device ANT via an RF input $RF_{in}$. In the receiver section 1 the received RF FM RDS signal is converted into a baseband signal. The audio frequency part of this baseband audio signal is processed in an audio processing unit 2 and can be applied from an audio output 3 to an audio reproducing device which is not shown.

The RDS receiver also comprises a device 4 for processing the RDS signal in the last-mentioned baseband signal and a memory circuit 5 connected to the device 4 and comprising a plurality of memory banks, only two of which are shown for the sake of clarity, hereinafter referred to as first and second memory banks M1 and M2. These memory banks M1 and M2 have a plurality of storage locations, eight of which are shown for the sake of simplicity, for storing a list of alternative frequencies (AFs) of the programs which are individually assigned to these memory banks. The program identification codes (PI codes) of these programs are stored at storage locations PI in M1 and M2, while an indication bit, hereinafter referred to as TP bit, indicating whether the relevant program is a traffic program or not a traffic program is stored at storage locations TP, and an indication bit, hereinafter referred to as MF bit, indicating whether the AFs are stored in the different lists in an ordered structure determined by the mapped frequencies is stored at storage locations MF. The memory circuit 5 further comprises a memory bank MQ for storing a plurality of indicators indicating the reception quality of the alternative frequencies stored in the active memory bank, i.e. the memory bank of the broadcast program to which the receiver is tuned. In the relevant example the active memory bank is the first memory bank M1 which is assigned to the broadcast program to which the receiver is tuned.

The PI code of the broadcast program, which is, for example, a non-traffic program, the TP bit and the AFs, for example, f1 to f8 are read into M1 via the so-called group type OA. The corresponding data of programs relevant to the broadcast program are stored in the memory circuit 5 via the EON group type 14A during tuning to the broadcast program. Said traffic program data, including the AFs f9, f10 and f11 which have, for example, a broadcast range in common with the AFs, f1, f2 and f5 of the current broadcast program are stored in the second memory circuit M2 assigned to this traffic program.

The operation of the receiver according to the invention described so far is evident from the EBU Document Tech. 3244 of March 84 and from the afore-mentioned supplement thereto.

The receiver shown has a selector switch S with which the user can set the receiver in such a way that no traffic information, said first class of traffic information, the second class of traffic information or the third class of traffic information, respectively, is reproduced. By way of example the receiver is tuned to a broadcast program whose PI code and the AFs are stored in M1. The tuning frequency is then f4 because it has the optimum reception quality (9). The optimum reception quality but one (5) occurs at the AF f5. This frequency f5 is mapped with the AF f11 of the traffic program in M2. In this example the AF f4 is not mapped with an AF in M2. The device 4 of the receiver thus monitors the TA bit as well as the CL1, CL2 bits in the second block of received EON groups 14B. For example, if the first class of traffic information has been selected, the selector switch is set to a position C1 and when traffic information is broadcast, which is recognized by way of the logic value 1 for the TA bit in the second block of the group type 14B received via the broadcast program, tuning will change over from the frequency f4 to the frequency f11 if the classification bits CL1 and CL2 in the last-mentioned second block have the logic values 0 and 1, respectively.

After the traffic information has ended, the TA bit assumes the logic value 0 whereupon tuning is reset to f4 of the original broadcast program.

Analogously, automatic change-over to traffic information of the second and third class can be realised by setting the selector switch S to positions C2 and C3, respectively, in which positions the device monitors CL1 and CL2 for the occurrence of logic values 1 and 0, and 1 and 1, respectively. When the selector switch S is set to the position 0, there is no change-over to a traffic program.

It is to be noted that the receiver shown may be muted when it is tuned to a broadcast program and when, for example the sound of a cassette recorder is reproduced. It will be further evident that the invention is not limited to the embodiment shown and that other embodiments are alternatively possible, for example those in which the AFs are not stored in an order determined by a mapped frequency and/or in which the traffic information classes are reproduced, by way of which the user can initiate a change-over.

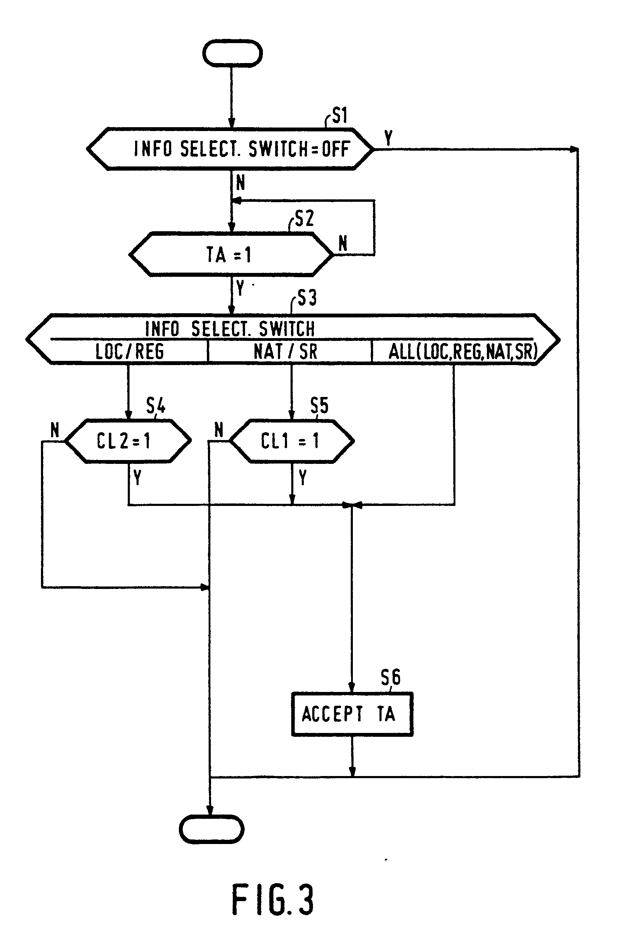

Fig. 3 is a flow chart showing the steps performed by the device 4 to process the data in the second block of received EON groups type 14B according to the invention. The device determines in step S1 whether traffic information is desired. If so, the TA bit is monitored in step S2 for the occurrence of the logic value 1. If TA = 1, the position of the selector switch S is detected in step S3 whereafter the second classification bit CL2 is monitored in step S4 for the occurrence of the logic value 1 (S in position C1), the first classification bit CL1 (S in position C2) is monitored in step S5 for the occurrence of the logic value 2 or none of the two classification bits is monitored (S in position C3). If CL2 = 1 or if CL1 = 1, or if the selector switch S is in position 3, a change-over is initiated in step 6 when TA = 1. If the logic value 0 is determined in step S4 for CL2 or in step S5 for CL1, there is no change-over, independent of the value of the TA bit.

## Claims

1. A method of transmitting radio data system (RDS) signals in groups of the Extended Other Network (EON) type which accompany a broadcast program comprising data relating to a traffic program each group of which comprises the program identification code of each one of the two programs as well as first and second flag bits, said first flag bit being used to identify the traffic program as such and said second flag bit marking a live broadcast of traffic information in the traffic program, characterized in that the traffic information items are divided into several classes of geographical relevance, which classes are identified by means of a classification code word which is incorporated in said groups at least during a live broadcast of traffic information in the traffic program.

2. A method as claimed in Claim 1, characterized in that the classification code word identifies at least first to third classes of geographical relevance, in which first class the traffic information relates at most to the regional reception area of the traffic program, in which second class the traffic information relates to the total area of a country or supraregion, and in which third class the traffic information comprises that of the first and second classes.

3. A method as claimed in Claim 2, characterized in that the classification code word comprises first and second classification bits, which code word is incorporated in the second block of said groups of the EON type, the first and the second classification bit identifying said first and second class, respectively, of traffic information in the case of preselected logic values and both classification bits identifying said third class of traffic information in the case of a simultaneous occurrence of these logic values.

4. A receiver for processing RDS signals obtained by means of the method as claimed in Claim 1, which receiver comprises a receiver section for receiving and processing an RF RDS FM signal accompanying a broadcast program in a baseband RDS signal, a device for selecting the EON groups in the baseband RDS signal and for identifying the traffic program by way of the logic value of the first flag bit, at least first and second memory banks assigned to the program identification code of the broadcast program and traffic program, respectively, for storing the alternative frequencies of said programs in said banks, said device also being provided with means for identifying a live broadcast of traffic information in the traffic program by way of the logic value of the second flag bit, characterized in that the device also identifies the class of geographical relevance of the traffic information in the traffic program by way of the classification code word in the received EON grougs for selective tuning to a traffic program dependent on the identified class and on the logic value of the second flag bit.

5. A receiver as claimed in Claim 4, characterized in that the device realises tuning to the traffic program if the identified class of traffic information in the traffic program corresponds to a preselected class and if the second flag bit identifies a live broadcast of a traffic program.

6. A receiver as claimed in Claim 4, characterized by a display device for displaying the name and class of the traffic program if the second flag bit identifies a live broadcast of traffic information.

FIG.1

FIG.2

S1

INFO SELECT. SWITCH=OFF — Y

N

S2

TA = 1 — N

Y

S3

INFO SELECT. SWITCH

| LOC/REG | NAT / SR | ALL(LOC,REG,NAT,SR) |
|---|---|---|

S4

N — CL2 = 1

Y

S5

N — CL1 = 1

Y

S6

ACCEPT TA

# FIG.3

**European Patent Office**

# EUROPEAN SEARCH REPORT

Application Number

EP 91 20 0455

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 536 820  (BOSCH) <br> * The whole document * <br> --- | 1 | G 08 G    1/09 <br> H 04 H    1/00 |
| A | DE-A-3 824 309  (BOSCH) <br> * The whole document * <br> --- | 1 | |
| A | EP-A-0 290 679  (PHILIPS) <br> * Claim 1 * <br> --- | 1 | |
| A | ELECTRONICS & WIRELESS WORLD, vol. 93, no. 1620, October 1987, pages 1023-1026, Sutton, GB; S. SHUTE: "Towards the intelligent radio" <br> * The whole document * <br> ----- | 1 | |

**TECHNICAL FIELDS SEARCHED (Int. Cl.5)**

G 08 G
H 04 H

The present search report has been drawn up for all claims

| Place of search | Date of completion of the search | Examiner |
|---|---|---|
| THE HAGUE | 14-06-1991 | SGURA S. |

EPO FORM 1503 03.82 (P0401)